# EUROPEAN PATENT APPLICATION

(11) **EP 4 830 553 A1**
(43) Date of publication of application: **28.10.2026**
(21) Application number: 24908270.2
(22) Date of filing: 12.12.2024
(51) Int. Cl.: A24F 40/46, H05B 6/64, H02M 3/00, H02M 7/42

(54) **AEROSOL GENERATION DEVICE**

(30) Priority: 19.12.2023 KR 20230186191
(71) Applicant: KT&G Corporation, Daedeok-gu Daejeon 34337 (KR)
(72) Inventor: SEO, Jang Won, Daejeon 34023 (KR)
(74) Representative: Ter Meer und Partner mbB
(86) International application number: PCT/KR2024/096843
(87) International publication number: WO 2025/135988

(57) **Abstract**

An aerosol generating device according to an embodiment includes an oscillation unit which generates microwaves, a resonance unit which receives an aerosol generating article and heats the aerosol generating article by resonating the microwaves, and a processor which applies a control signal to the oscillation unit to control an output frequency of the microwaves output from the oscillation unit.

## Description

### Technical Field

The present disclosure relates to an aerosol generating device for heating an aerosol generating article through dielectric heating.

### Background Art

In recent years, there has been an increasing demand for alternative methods to overcome the disadvantages of conventional cigarettes. For example, there is an increasing demand for a system that produces aerosols by heating a cigarette (or an "aerosol generating article") by using an aerosol generating device, rather than a method of producing an aerosol by burning a cigarette.

On the other hand, conventional aerosol generating devices heat an aerosol generating article by resistance heating, induction heating, and ultrasonic heating. However, compared with dielectric heating, the conventional aerosol generating devices have a low preheating rate and provide nonuniform heating.

In addition, although some of the conventional aerosol generating devices use dielectric heating, they merely use antennas to radiate microwaves, thus causing power transfer efficiency to drop significantly.

### Disclosure of Invention

### Technical Problem

In order to solve the above problems, the present disclosure provides an aerosol generating device capable of heating an aerosol generating article by dielectric heating using microwave resonance.

The technical problem of the present disclosure is not limited to the above and other technical problems may be derived from the following examples.

### Solution to Problem

An aerosol generating device according to an embodiment includes an oscillation unit that generates microwaves, a resonance unit that receives an aerosol generating article and heats the aerosol generating article by resonating the microwaves, and a processor that applies a control signal to the oscillation unit and controls an output frequency of the microwaves output from the oscillation unit.

### Advantageous Effects of Invention

The aerosol generating device of the present disclosure heats a dielectric material by using microwave resonance, and thus has the advantage of significantly increasing the power transfer efficiency.

In addition, the aerosol generating device estimates a resonance frequency of microwave resonance in real time and matches an output frequency of an oscillation unit with the resonance frequency, thereby significantly increasing the power transfer efficiency and providing a uniform taste until the end of the heating process.

In addition, since the aerosol generating device heats the aerosol generating article by using the microwave resonance, the entire aerosol generating article may be uniformly heated.

In addition, since the aerosol generating device heats the aerosol generating article by using the microwave resonance, the aerosol generating article may be quickly preheated.

In addition, the aerosol generating device may significantly reduce power consumption when the aerosol generating article is heated by using the microwave resonance.

Effects of the disclosure are not limited by the descriptions above, and more various effects are included in the present specification.

### Brief Description of Drawings

FIG. 1 is a perspective view of an aerosol generating device according to an embodiment.
FIG. 2 is an internal block diagram of an aerosol generating device according to an embodiment.
FIG. 3 is an internal block diagram of a dielectric heating unit in FIG. 2.
FIG. 4 is a perspective view of a heater assembly according to an embodiment.
FIG. 5 is a cross-sectional view of the heater assembly of FIG. 4.
FIG. 6 is a schematic perspective view of a heater assembly according to another embodiment.
FIG. 7 is an internal block diagram illustrating a method of controlling output of an oscillation unit, according to an embodiment.
FIG. 8 is a diagram illustrating a method for tracking a resonance frequency by using output microwave power of an oscillation unit and reflected microwave power of a resonance unit, according to an embodiment.

### Best Mode for Carrying out the Invention

An aerosol generating device according to an embodiment includes an oscillation unit that generates microwaves, a resonance unit that receives an aerosol generating article and heats the aerosol generating article by resonating the microwaves, and a processor that applies a control signal to the oscillation unit and controls an output frequency of the microwaves output from the oscillation unit.

According to an embodiment, the aerosol generating device further includes a digital-to-analog converter (DAC) that receives the control signal in a digital format from the processor, converts the received digital control signal into an analog control signal, and transmits the analog control signal to the oscillation unit.

The oscillation unit determines the output frequency of the microwaves based on a voltage magnitude of the analog control signal.

The output frequency of the microwaves is linearly proportional to a voltage magnitude of the analog control signal.

The aerosol generating device according to an embodiment further includes a power monitoring unit configured to measure reflected microwave power reflected from the resonance unit and input to the oscillation unit, wherein the processor generates the control signal based on the reflected microwave power measured by the power monitoring unit.

In the resonance unit, a resonance frequency of the microwaves is varied as a dielectric material included in the aerosol generating article is heated and consumed by the microwaves.

The resonance frequency in the resonance unit increases as the dielectric material included in the aerosol generating article decreases.

The power monitoring unit measures the reflected microwave power corresponding to the variation of the resonance frequency.

The processor controls an output of the oscillation unit such that the reflected microwave power measured by the power monitoring unit falls within a preset reference power range.

The processor sweeps an output frequency of microwave power output from the oscillation unit within the preset reference band range and adjusts the output frequency of the microwave power such that the reflected microwave power is within the reference power range.

The processor sweeps the output frequency of the microwave power output from the oscillation unit in the reference band range of between 2.4 Ghz and 2.5 Ghz.

The processor adjusts the output frequency of the microwave power to any one frequency selected from the reference band range, thereby matching the output frequency with a resonance frequency of the resonance unit.

The processor adjusts, according to a preset power profile, the magnitude of microwave power output from the oscillation unit, and controls the magnitude of the microwave power and the output frequency of the microwave power independently of each other.

The resonance unit includes a first inner conductor in the shape of a hollow cylinder surrounding an area of the aerosol generating article, and a second inner conductor in the shape of a hollow cylinder spaced at a certain distance from the first inner conductor and surrounding another area of the aerosol generating article, wherein the microwaves are resonated by the first inner conductor and the second inner conductor.

The resonance unit includes a first inner conductor in the shape of a hollow cylinder surrounding an area of the aerosol generating article, and a second inner conductor in the shape of a hollow cylinder spaced at a certain distance from the first inner conductor and surrounding another area of the aerosol generating article, wherein the microwaves are resonated by the first inner conductor and the second inner conductor.

### Mode for the Invention

Hereinafter, embodiments disclosed herein are described in detail with reference to the accompanying drawings, and the same or similar components are denoted by the same reference numerals regardless of the drawing symbols, and descriptions that are substantially the same as those given above may be omitted.

The suffixes "module" and "unit" used for components in the following description are given or used interchangeably only for ease of description and do not have distinct meanings or functions from each other.

In addition, in describing the embodiments disclosed herein, when it is determined that the detailed description of the related known technology may obscure the subject matter of the embodiments disclosed herein, the detailed description thereof is omitted. In addition, the attached drawings are only intended to facilitate understanding of the embodiments disclosed herein, and the technical ideas disclosed herein are not limited by the attached drawings, and should be understood to include all modifications, equivalents, or substitutes included in the spirit and technical scope of the present disclosure.

Although ordinal terms, such as first, second, and the like, may be used to describe various components, the components are not limited by the terms. The terms are only used for the purpose of distinguishing one component from another.

When it is said that a component is "connected" or "linked" to another component, it may be understood that the component is directly connected or linked to another component, but there may also be other components in between. In contrast, when it is said that a component is "directly connected" or "directly linked" to another component, it should be understood that there are no components in between.

The singular expressions include plural expressions unless the context clearly dictates otherwise.

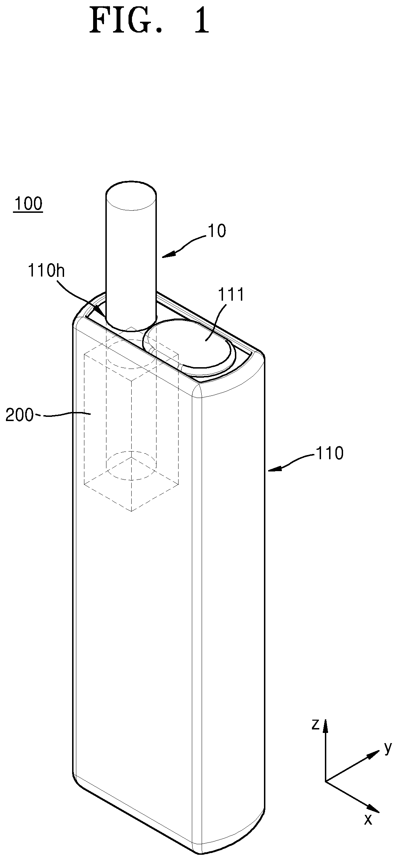

FIG. 1 is a perspective view of an aerosol generating device according to an embodiment.

Referring to FIG. 1, an aerosol generating device 100 according to an embodiment may include a housing 110 capable of receiving an aerosol generating article 10 and a heater assembly 200 for heating the aerosol generating article 10 received in the housing 110.

The housing 110 may form an overall appearance of the aerosol generating device 100, and components of the aerosol generating device 100 may be arranged in an internal space (or "mounting space") of the housing 110. For example, the heater assembly 200, a battery, a processor, and/or a sensor may be arranged in the internal space of the housing 110, but components arranged in the internal space thereof are not limited thereto.

An insertion hole 110h may be formed in one area of the housing 110, and at least one area of the aerosol generating article 10 may be inserted into the housing 110 through the insertion hole 110h. For example, the insertion hole 110h may be formed in one area of a top surface (e.g., a surface facing a z-direction) of the housing 110, but the position where the insertion hole 110h is formed is not limited thereto. In another embodiment, the insertion hole 110h may be formed in one area of a side surface (e.g., a surface facing an x-direction) of the housing 110.

The heater assembly 200 may be arranged in the internal space of the housing 110 and may heat the aerosol generating article 10 inserted or received in the housing 110 through the insertion hole 110h. For example, the heater assembly 200 may be arranged to surround at least one area of the aerosol generating article 10 inserted or received in the housing 110 to heat the aerosol generating article 10.

According to an embodiment, the heater assembly 200 may heat the aerosol generating article 10 by dielectric heating. The "dielectric heating" in the present disclosure refers to a method of heating a dielectric that is an object to be heated by using resonance of microwaves and/or an electric field (or a magnetic field) of the microwaves. Since the microwaves are generated by the high-frequency power as an energy source for heating the object to be heated, the microwaves may be used interchangeably with the microwave power in the following.

The charges or ions of the dielectric included in the aerosol generating article 10 may be vibrated or rotated by the microwave resonance inside the heater assembly 200, and heat may be generated in the dielectric by frictional heat generated during the process of vibrating or rotating the charges or ions, thereby heating the aerosol generating article 10.

As the aerosol generating article 10 is heated by the heater assembly 200, aerosol may be generated from the aerosol generating article 10. In the present disclosure, the "aerosol" may refer to gas particles generated by mixing air with vapor generated as the aerosol generating article 10 is heated.

The aerosol generated from the aerosol generating article 10 may be discharged to the outside of the aerosol generating device 100 through the aerosol generating article 10 or through an empty space between the aerosol generating article 10 and the insertion hole 110h. A user may smoke by bringing the oral cavity into contact with one area of the aerosol generating article 10 exposed to the outside of the housing 110 and inhaling the aerosol discharged to the outside of the aerosol generating device 100.

The aerosol generating device 100 according to an embodiment may further include a cover 111 movably disposed on the housing 110 to open or close the insertion hole 110h. For example, the cover 111 may be slidably coupled to the top surface of the housing 110 and may expose the insertion hole 110h to the outside of the aerosol generating device 100 or cover the insertion hole 110h not to expose the insertion hole 110 H to the outside of the aerosol generating device 100.

In an example, the cover 111 may expose the insertion hole 110h to the outside of the aerosol generating device 100 in a first position (or "open position"). When the aerosol generating device 100 is exposed to the outside, the aerosol generating article 10 may be inserted into the housing 110 through the insertion hole 110h.

In another example, the cover 111 may cover the insertion hole 110h in a second position (or "closed position") not to expose the insertion hole 110h to the outside of the aerosol generating device 100. In this case, when the aerosol generating device 100 is not used, the cover 111 may prevent external foreign substances from entering the interior of the heater assembly 200 through the insertion hole 110h.

FIG. 1 illustrates only the aerosol generating device 100 for heating the aerosol generating article 10 in a solid state, but the aerosol generating device 100 is not limited to the illustrated embodiment.

An aerosol generating device according to another embodiment may generate aerosol by heating an aerosol generating material in a liquid or gel state, other than the aerosol generating article 10 in a solid state, through the heater assembly 200.

An aerosol generating device according to the other embodiment may include the heater assembly 200 for heating the aerosol generating article 10 and a cartridge (or "vaporizer") including the aerosol generating material in a liquid or gel state and heating the aerosol generating material. The aerosol generated from the aerosol generating material may travel to the aerosol generating article 10 along an airflow passage that communicates the cartridge with the aerosol generating article 10 to be mixed with the aerosol generated from the aerosol generating article 10, and then pass through the aerosol generating article 10 to be delivered to the user.

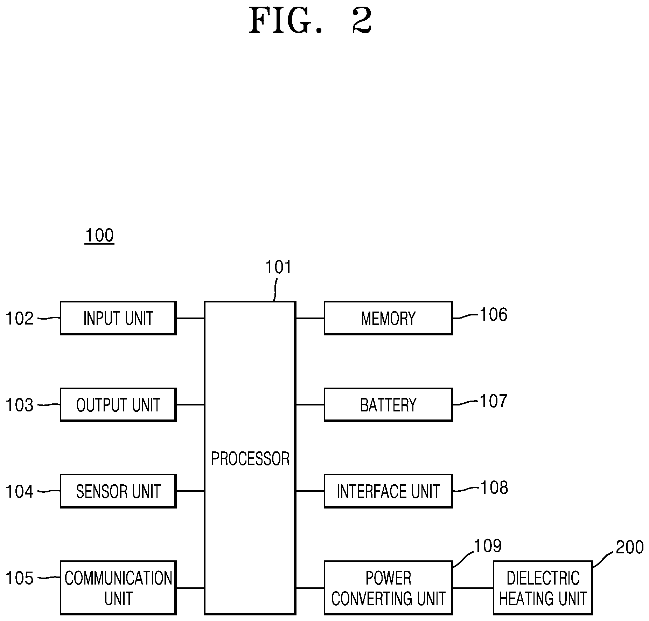

FIG. 2 is an internal block diagram of an aerosol generating device according to an embodiment.

Referring to FIG. 2, the aerosol generating device 100 may include an input unit 102, an output unit 103, a sensor unit 104, a communication unit 105, memory 106, a battery 107, an interface unit 108, a power converting unit 109, and a dielectric heating unit 200.

The input unit 102 may receive user input. For example, the input unit 102 may be provided as a single push button. In another example, the input unit 102 may be a touch panel including at least one touch sensor. The input unit 102 may transmit an input signal to a processor 101. Based on the user input, the processor 101 may control power supplied to the dielectric heating unit 200 or control the output unit 103 to output a user notification.

The output unit 103 may output information about a state of the aerosol generating device 100. The output unit 103 may output a charging/discharging state of the battery 107, a heating state of the dielectric heating unit 200, an insertion state of the aerosol generating article 10, and error information of the aerosol generating device 100. To this end, the output unit 103 may include a display, a haptic motor, and an audio output unit.

The sensor unit 104 may sense a state of the aerosol generating device 100 or a surrounding state of the aerosol generation device 100, and transfer the sensed information to the processor 101. Based on the sensed information, the processor 101 may control the aerosol generating device 100 to perform various functions, such as heating control of the dielectric heating unit 200, smoking restriction, determination whether the aerosol generating article 10 is inserted, and notification display.

The sensor unit 104 may include a temperature sensor, a puff sensor, and an insertion detection sensor.

The temperature sensor may sense the temperature inside the dielectric heating unit 200 in a non-contact manner or may directly obtain the temperature of a resonator by contacting the dielectric heating unit 200. According to an embodiment, the temperature sensor may also sense the temperature of the aerosol generating article 10. In addition, the temperature sensor may be arranged adjacent to the battery 107 to obtain the temperature of the battery 107. The processor 101 may control power supplied to the dielectric heating unit 200 based on temperature information of the temperature sensor.

The puff sensor may sense the user's puff. The puff sensor may sense the user's puff based on at least one of a temperature change, a flow change, a power change, and a pressure change. The processor 101 may control power supplied to the dielectric heating unit 200 based on puff information of the puff sensor. For example, the processor 101 may count the number of puffs and cut off the power supplied to the dielectric heating unit 200 when the number of puffs reaches a preset maximum number of puffs. For another example, the processor 101 may cut off the power supplied to the dielectric heating unit 200 when puffs are not detected for a preset time or longer.

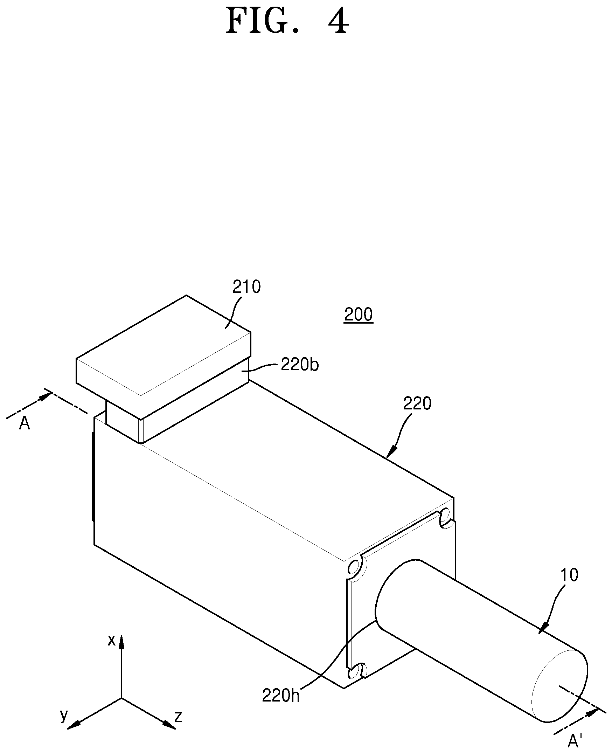

The insertion detection sensor may be arranged inside a receiving space (220h in FIG. 4) or adjacent to the receiving space 220h to detect insertion and removal of the aerosol generating article 10 received in the insertion hole 110h. For example, the insertion detection sensor may include an inductive sensor and/or a capacitance sensor. The processor 101 may supply power to the dielectric heating unit 200 when the aerosol generating article 10 is inserted into the insertion hole 110h.

According to an embodiment, the sensor unit 104 may further include a reuse detection sensor, a motion detection sensor, a humidity sensor, a barometric pressure sensor, a magnetic sensor, a cover removal detection sensor, a position sensor (GPS), a proximity sensor, and the like. Since the function of each of the sensors can be intuitively inferred from their names, detailed description is omitted.

The communication unit 105 may include at least one communication module for communication with an external electronic device. The processor 101 may control the communication unit 105 to transmit information on the aerosol generating device 100 to the external electronic device. Alternatively, the processor 101 may receive the information from the external electronic device through the communication unit 105 to control components included in the aerosol generating device 100. For example, the information transmitted between the communication unit 105 and the external electronic device may include user authentication information, firmware update information, user smoking pattern information, and the like.

The memory 106, which is hardware for storing various types of data processed in the aerosol generating device 100, may store data to be processed and data processed by the processor 101. For example, the memory 106 may store data about, e.g., an operation time of the aerosol generating device 100, a maximum number of puffs, a current number of puffs, at least one temperature profile, and a smoking pattern of the user.

The battery 107 may supply power to the dielectric heating unit 200 to heat the aerosol generating article 10. In addition, the battery 107 may supply power necessary for the operation of other components included in the aerosol generating device 100. The battery 107 may include a rechargeable battery or a removable battery which is detachable.

The interface unit 108 may include a connection terminal that can be physically connected to the external electronic device. The connection terminal may include at least one of an HDMI connector, a USB connector, an SD card connector, an audio connector (e.g., a headphone connector), or a combination thereof. The interface unit 108 may transmit and receive information to and from the external electronic device or may charge power through the connection terminal.

The power converting unit 109 may include a direct current (DC)-to-DC converter that adjusts a voltage level of DC power supplied from the battery 107, and an inverter that converts the DC power into alternating current (AC) power. The power converting unit 109 may provide the converted AC power to the dielectric heating unit 200. The inverter may include at least one switching element. The inverter may be configured as a full-bridge or may be configured as a half-bridge. The processor 101 may apply a first control signal to the power converting unit 109 to control ON/OFF of the switching element included in the inverter. In addition, the processor 101 may set a feedback voltage value for adjusting an output voltage of the DC-to-DC converter by applying the first control signal to the power converting unit 109.

The dielectric heating unit 200 may heat the aerosol generating article 10 by dielectric heating. The dielectric heating unit 200 may have a configuration corresponding to the heater assembly 200 in FIG. 1.

The dielectric heating unit 200 may heat the aerosol generating article 10 by using microwaves and/or an electric field of the microwaves (hereinafter, referred to as microwave or microwave power when there is no need for distinction therebetween). The heating method of the dielectric heating unit 200 may include heating an object to be heated by forming microwaves within a resonant structure, rather than radiating microwaves using antennas. The resonant structure is described below with reference to FIG. 4.

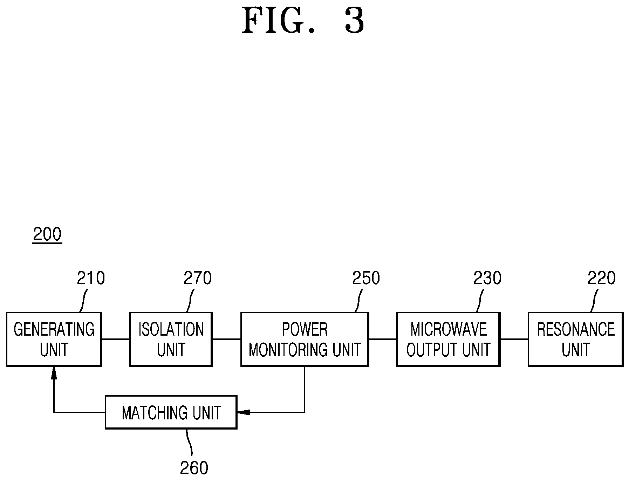

The dielectric heating unit 200 may output microwaves having a high frequency to a resonance unit (220 in FIG. 3). The microwave may include, but is not limited to, power in the industrial scientific and medical (ISM) band allowed for heating. The resonance unit 220 may be designed in consideration of a wavelength of the microwaves so that the microwaves may resonate in the resonance unit 220.

The aerosol generating article 10 may be inserted into the resonance unit 220 and the dielectric material in the aerosol generating article 10 may be heated by the resonance unit 220. For example, the aerosol generating article 10 may include a polar material, and molecules within the polar material may be polarized within the resonance unit 220. The molecules may vibrate or rotate due to the polarization, and the aerosol generating article 10 may be heated by frictional heat generated during this process. The dielectric heating unit 200 is described in more detail with reference to FIG. 3.

The processor 101 may control the overall operation of the aerosol generating device 100. The processor 101 may be implemented by an array of multiple logic gates or may be implemented by a combination of a general-purpose microprocessor and memory storing a program that can be executed on the microprocessor. In addition, The processor 101may also be implemented in other forms of hardware.

The processor 101 may control the DC power supplied from the battery 107 to the power converting unit 109 and/or the AC power supplied from the power converting unit 108 to the dielectric heating unit 200 according to the required power of the dielectric heating unit 200. In an embodiment, the aerosol generating device 100 may include the DC-to-DC converter configured to boost or depress the DC power, and the processor 101 may control the DC-to-DC converter by applying the first control signal to adjust the magnitude of the DC power. In addition, the processor 101 may control the AC power supplied to the dielectric heating unit 200 by applying the first control signal to adjust the switching frequency and the duty ratio of the switching element included in the power converting unit 109.

The processor 101 may control the heating temperature of the aerosol generating article 10 by applying a second control signal to the dielectric heating unit 200 to control the microwave power of the dielectric heating unit 200 and the resonance frequency of the dielectric heating unit 200. Accordingly, an oscillation unit 210, an isolation unit 240, a power monitoring unit 250, and a matching unit 260 in FIG. 3, to be described below, may be some components of the processor 101.

The processor 101 may control the microwave power of the dielectric heating unit 200 based on temperature profile information stored in the memory 106. In other words, the temperature profile may include information about the target temperature of the dielectric heating unit 200 over time, and the processor 101 may control the microwave power of the dielectric heating unit 200 over time.

The processor 101 may adjust the microwave frequency so that the resonance frequency of the dielectric heating unit 200 is constant. The processor 101 may control the dielectric heating unit 100 to track a change in the resonance frequency of the dielectric heating unit 200 according to heating of the object to be heated in real time and output the microwave frequency according to the changed resonance frequency. In other words, the processor 101 may change the microwave frequency in real time regardless of the pre-stored temperature profile.

FIG. 3 is an internal block diagram of the dielectric heating unit in FIG. 2.

Referring to FIG. 3, the dielectric heating unit 200 may include an oscillation unit 210, an isolation unit 240, a power monitoring unit 250, a matching unit 260, a microwave output unit 230, and a resonance unit 220.

The oscillation unit 210 may receive AC power from the power converting unit 109 to generate high-frequency microwave power. According to an embodiment, the power converting unit 109 may be a component included in the oscillation unit 210. The microwave power may be selected from the 915 MHz, 2.45 GHz and 5.8 GHz frequency bands included in the ISM bands.

The oscillation unit 210 includes a solid-state-based RF generating device, which can be used to generate microwave power. The solid-state-based RF generating device may be implemented as a semiconductor. When the oscillation unit 210 is implemented as a semiconductor, the size of the dielectric heating unit 200 may be reduced and the lifetime of the device may be increased.

The oscillation unit 210 may output the microwave power toward the resonance unit 220. The oscillation unit 210 may include a power amplifier that increases or decreases the microwave power. The power amplifier may adjust the magnitude of the microwave power by receiving the second control signal of the processor 101. For example, the power amplifier may reduce or increase the amplitude of the microwaves. By adjusting the amplitude of the microwaves, the microwave power may be adjusted.

In an embodiment, the oscillation unit 210 may be configured as a voltage-controlled oscillator (VCO). The processor 101 may adjust the frequency of the microwaves output from the oscillation unit 210 through the second control signal. Specifically, the oscillation unit 210 may receive the analog control signal. The frequency of the microwaves output from the oscillation unit 210 may be determined based on the voltage magnitude of the received control signal. The frequency of the microwaves may be determined to be linearly proportional to the voltage magnitude of the control signal. That is, the relationship between the frequency ω*ₒᵤₜ* of the microwaves output from the oscillation unit 210 and the control signal *V_{cont}* applied to the oscillation unit 210 may be expressed as the following equation 1: [Equation 1] ${ω}_{out} = {ω}_{o} + K ⋅ {V}_{cont}$

ω*ₒ* is a constant value determined according to the design of the VCO, and K is a gain or a sensitivity determined according to a design of the oscillator. The control signal *V_{cont}* may be a value obtained by converting the second control signal received from the processor 101 into analog by the digital-to-analog converter (hereinafter, referred to as DAC).

The processor 101 may generate the second control signal based on the pre-stored temperature profile and adjust the magnitude of the microwave power output from the oscillation unit 210 through the second control signal. For example, the temperature profile may include target temperature information according to a preheating period and a smoking period, and the oscillation unit 210 may supply microwave power with a first power in the preheating period and supply microwave power with a second power less than the first power in the smoking period.

The isolation unit 240 may cut off the microwave power input from the resonance unit 220 toward the oscillation unit 210. Although most of the microwave power output from the oscillation unit 210 is absorbed by the object to be heated, part of the microwave power may be reflected by the object to be heated and transmitted back to the oscillation unit 210 depending on the heating pattern of the object to be heated. This is because the impedance of the resonance unit 220 viewed from the oscillation unit 210 changes according to the depletion of polar molecules due to the heating of the object to be heated. The meaning of "the impedance of the resonance unit 220 viewed from the oscillation unit 210 changes" may be the same as the meaning of "the resonance frequency of the resonance unit 220 changes". When the microwave power reflected from the resonance unit 220 is input to the oscillation unit 210, the oscillation unit 210 may fail and may not exhibit expected output performance. The isolation unit 240 may direct the microwave power reflected from the resonance unit 220 in a certain direction and absorb the microwave power without returning the microwave power to the oscillation unit 210. To this end, the isolation unit 240 may include a circulator and a dummy load.

The power monitoring unit 250 may monitor the microwave power output from the oscillation unit 210 and the reflected microwave power reflected from the resonance unit 220. The power monitoring unit 250 may transmit information about the microwave power and the reflected microwave power to the matching unit 260.

The matching unit 260 may match the impedance of the resonance unit 220 viewed from the oscillation unit 210 with the impedance of the oscillation unit 210 viewed from the resonance unit 220 to minimize the reflected microwave power. The matching of impedances may have the same meaning as matching the frequency of the oscillation unit 210 with the resonance frequency of the resonance unit 220. Accordingly, the matching unit 260 may vary the frequency of the oscillation unit 210 to match the impedances. In other words, the matching unit 260 may adjust the frequency of the microwave power output from the oscillation unit 210 to minimize the reflected microwave power. The impedance matching of the matching unit 260 may be performed in real time regardless of the temperature profile.

Meanwhile, the oscillation unit 210, the isolation unit 240, the power monitoring unit 250, and the matching unit 260 described above are separate components from the microwave output unit 230 and the resonance unit 220 described below, and may be implemented as a microwave source in the form of a chip. In addition, according to an embodiment, at least one of the oscillation unit 210, the isolation unit 240, the power monitoring unit 250, and the matching unit 260 may be implemented as some components of the processor 101.

The microwave output unit 230 configured to input microwave power to the resonance unit 220 may correspond to a coupler in FIG. 4. The microwave output unit 230 may be implemented in the form of an SMA, SMB, MCX, or MMCX connector. The microwave output unit 230 may connect the microwave source in the form of a chip to the resonance unit 220 to transfer microwave power generated from the microwave source to the resonance unit 220.

The resonance unit 220 may heat an object to be heated by forming the microwaves in the resonant structure. The resonance unit 220 may include a receiving space where the aerosol generating article 10 is received, and the aerosol generating article 10 may be dielectrically heated by being exposed to the microwaves. For example, the aerosol generating article 10 may include a polar material, and molecules in the polar material may be polarized by the microwaves inside the resonance unit 220. The molecules may vibrate or rotate due to the polarization, and the aerosol generating article 10 may be heated by frictional heat generated during this process.

The resonance unit 220 includes at least one inner conductor to enable the microwaves to resonate, wherein the microwaves may resonate inside the resonance unit 220 according to the arrangement, thickness, or length of the inner conductor.

The resonance unit 220 may be designed in consideration of a wavelength of the microwaves so that the microwaves resonate inside the resonance unit 220. In order for the microwaves to resonate inside the resonance unit 220, a short end where the cross-section is closed and an open end where at least one area of the cross-section is open in a direction opposite to the short end are required. In addition, the length between the short end and the open end needs to be set to an integer multiple of 1/4 microwave wavelength. The resonance unit 220 in the present disclosure is selected to have a length of 1/4 microwave wavelength to miniaturize the device. In other words, the length between the short end and the open end of the resonance unit 220 may be set to a length of 1/4 microwave wavelength.

The resonance unit 220 may include a dielectric receiving space. A material capable of changing the resonance frequency of the entire resonance unit 220 and reducing the size of the resonance unit 220 is arranged in the dielectric receiving space which is different from the receiving space of the aerosol generating article 10. In an embodiment, the dielectric receiving space may contain a dielectric with a low microwave absorption rate. This is to prevent a phenomenon where energy to be transferred to the object to be heated is transferred to the dielectric, causing the dielectric itself to be heated. The microwave absorption rate may be expressed as a loss tangent, which is a ratio of an imaginary part to a real part of a complex dielectric constant. In an embodiment, the dielectric receiving space may receive a dielectric having a loss tangent of a preset size or less, and the preset size may be 1/100. For example, the dielectric may be, but is not limited to, at least one of quartz, tetrafluoroethylene, and aluminum oxide, or a combination thereof.

FIG. 4 is a perspective view of a heater assembly according to an embodiment.

Referring to FIG. 4, the heater assembly 200 according to an embodiment may include the oscillation unit 210 and the resonance unit 220. FIG. 4 may include an embodiment of the heater assembly 200 and the dielectric heating unit 200 described above, and descriptions that are substantially the same as those given above may be omitted.

The oscillation unit 210 may generate microwaves in a specified frequency band as power is supplied. The microwave generated by the oscillation unit 210 may be transmitted to the resonance unit 220 via the coupler (not shown).

The resonance unit 220 may include the receiving space 220h for receiving at least one area of the aerosol generating article 10 and may resonate the microwaves generated by the oscillation unit 210, thereby heating the aerosol generating article 10 by dielectric heating. For example, the charges of glycerin contained in the aerosol generating article 10 may vibrate or rotate due to the microwave resonance, and heat may be generated in the glycerin due to frictional heat generated when the charges vibrate or rotate, thereby heating the aerosol generating article 10.

According to an embodiment, the resonance unit 220 may be formed of a material having a low microwave absorption rate so as to prevent the microwaves generated by the oscillation unit 210 from being absorbed by the resonance unit 220.

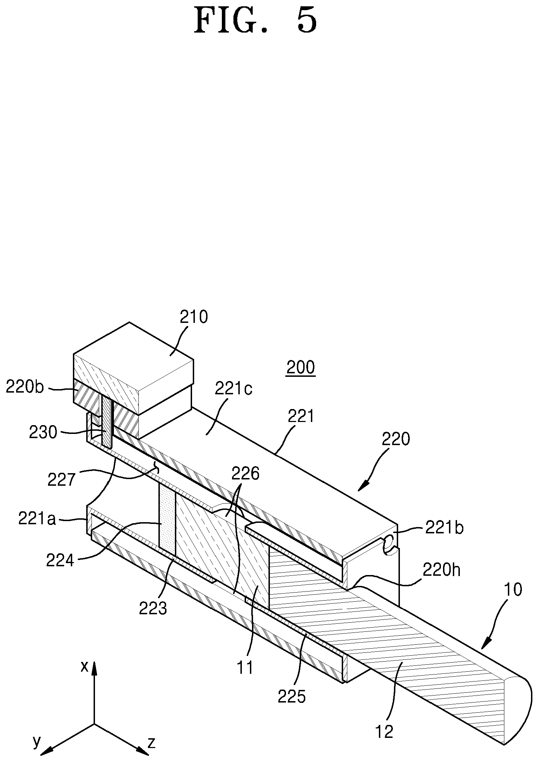

Hereinafter, a specific structure of the resonance unit 220 of the heater assembly 200 may be described with reference to FIG. 5.

FIG. 5 is a cross-sectional view of the heater assembly in FIG. 4. FIG. 5 shows a cross-section of the heater assembly 200 in FIG. 4 taken in direction A-A'.

Referring to FIG. 5, the heater assembly 200 according to an embodiment may include the oscillation unit 210, the resonance unit 220, and a coupler 230. The components of the heater assembly 200 may be the same as or similar to at least one of the components of the heater assembly 200 in FIG. 4, and descriptions that are substantially the same as those given above may be omitted.

The oscillation unit 210 may generate microwaves in a specified frequency band when an AC voltage is applied, and the microwaves generated by the oscillation unit 210 may be transmitted to the resonance unit 220 through the coupler 230.

According to an embodiment, the oscillation unit 210 may be fixed to the resonance unit 220 to prevent separation from the resonance unit 220 during use of the aerosol generating device. In an example, the oscillation unit 210 may be fixed onto the resonance unit 220 by being supported by a bracket 220b protruding from one area of the resonance unit 220 in the x-direction. In another example, the oscillation unit 210 may be fixed onto the resonance unit 220 in a manner that the oscillation unit 210 is attached to one area of the resonance unit 220 without the bracket 220b.

Although only an embodiment where the oscillation unit 210 is fixed to one area of the resonance unit 220 facing the x-direction is illustrated in the drawing, the position of the oscillation unit 210 is not limited to the illustrated embodiment. In another embodiment, the oscillation unit 210 may be fixed to another area facing a -z-direction of the resonance unit 220.

The resonance unit 220 may be arranged to surround at least one area of the aerosol generating article 10 inserted into the aerosol generating device and may heat the aerosol generating article 10 through the microwaves generated by the oscillation unit 210. For example, dielectric materials included in the aerosol generating article 10 may generate heat through the electric field generated inside the resonance unit 220 by microwave, and the aerosol generating article 10 may be heated by heat generated from the dielectric materials.

According to an embodiment, the aerosol generating article 10 may include a tobacco rod 11 and a filter rod 12.

The tobacco rod 11 may include an aerosol generating material and may be manufactured as sheets or strands or may be manufactured as finely chopped tobacco sheets. For example, the aerosol generating material may include, but is not limited to, at least one of glycerin, propylene glycol, ethylene glycol, dipropylene glycol, diethylene glycol, triethylene glycol, tetraethylene glycol, and oleyl alcohol. In addition, the tobacco rod 11 may contain other additives, such as flavoring agents, wetting agents, and/or organic acids. In addition, a flavoring liquid, such as menthol or moisturizer, may be added to the tobacco rod 11 by spraying the flavoring liquid to the tobacco rod 11.

The filter rod 12 may include a cellulose acetate filter. The shape of the filter rod 12 is not limited thereto. For example, the filter rod 12 may include a cylindrical rod or a tubular rod having a hollow inside. In addition, the filter rod 12 may include a recess-type rod. When the filter rod 12 includes a plurality of segments, at least one of the plurality of segments may be made into another shape.

At least a part (e.g., glycerin) of the aerosol generating material included in the aerosol generating article 10 may include a dielectric having polarity in the electric field and may generate heat by dielectric heating to heat the aerosol generating article 10.

According to an embodiment, the resonance unit 220 may include an outer conductor 221, a first inner conductor 223, and a second inner conductor 225.

The outer conductor 221 may form an overall appearance of the resonance unit 220 and may be formed into an empty hollow shape to arrange components of the resonance unit 220 inside the outer conductor 221. The outer conductor 221 may include the receiving space 220h where the aerosol generating article 10 can be received, and the aerosol generating article 10 may be inserted into the outer conductor 221 through the receiving space 220h.

According to an embodiment, the outer conductor 221 may include a first surface 221a, a second surface 221b arranged to face the first surface 221b, and a side surface 221c surrounding an empty space between the first surface 221a and the second surface 221b. At least some of the components of the resonance unit 220 (e.g., the first inner conductor 223 and the second inner conductor 225) may be arranged in the internal space of the resonance unit 220 formed by the first surface 221a, the second surface 221b, and the side surface 221c.

The first inner conductor 223 may be formed in a hollow cylinder shape extending in a direction from the first surface 221a of the outer conductor 221 toward the internal space of the outer conductor 221.

According to an embodiment, one area of the first inner conductor 223 may be in contact with the coupler 230 connected to the oscillation unit 210, and the microwaves generated by the oscillation unit 210 may be transmitted to the first inner conductor223 through the coupler 230. For example, the coupler 230 may pass through the outer conductor 221 and may be arranged such that one end thereof is in contact with the oscillation unit 210 and the other end thereof is in contact with one area of the first inner conductor 223, and the microwaves generated by the oscillation unit 210 may be transmitted to the first inner conductor 223 through the coupler 230.

At this time, the coupler 230 may be arranged to pass through the outer conductor 221 without being in contact with the outer conductor 221 for transmission of the microwaves, but the arrangement structure of the coupler 230 is not limited thereto as long as the microwaves generated by the oscillation unit 210 can be transmitted to the first inner conductor 223.

A first area formed between the outer conductor 221 and the first inner conductor 223 may operate as a "first resonator" that generates an electric field through resonance of the microwaves. The first area may refer to a space formed by the first surface 221a and the side surface 221c of the outer conductor 221 and the first inner conductor 223, and microwave transmitted through the coupler 230 may resonate inside the first area to generate the electric field.

The second inner conductor 225 may be formed in a hollow cylinder shape extending in a direction from the second surface 221b of the outer conductor 221 toward the internal space of the outer conductor 225. The second inner conductor 225 may be spaced at a certain distance from the first inner conductor 223 in the internal space of the outer conductor 221, and a gap 226 may be formed between the first inner conductor 223 and the second inner conductor 225.

A second area formed between the outer conductor 221 and the second inner conductor 225 may operate as a "second resonator" that generates an electric field through resonance of the microwaves. The second inner conductor 225 may be coupled (e.g., capacitively coupled) to the first inner conductor 223, and when the electric field is generated inside the first area by the coupling relationship described above, an induced electric field may also be generated inside the second area. In the present disclosure, "capacitive coupling" may refer to a coupling relationship in which energy can be transferred by capacitance between two conductors.

For example, as the microwaves generated by the oscillation unit 210 are transmitted to the first inner conductor 223, the electric field may be generated inside the first area by resonance and the induced electric field may be generated inside the second area formed by the second inner conductor 225 coupled to the outer conductor 221 and the first inner conductor 223.

According to an embodiment, the first area and the second area of the resonance unit 220 may operate as a resonator having a length of 1/4 microwave wavelength (λ/4).

In an example, one end of the first area (e.g., an end in the -z-direction) may be formed as a short end as the cross-section of the first area is closed by the first surface 221a of the outer conductor 221, and the other end of the first area (e.g., an end in the z-direction) may be formed as an open end as the cross-section of the first area is open because the first surface 221a is not arranged. In another example, one end of the second area (e.g., an end in the -z-direction) may be formed as an open end as the cross-section of the second area is open, and the other end of the second area (e.g., an end in the z-direction) may be formed as a short end as the cross-section of the second area is closed by the second surface 221b of the outer conductor 221.

That is, the first area and the second area may be formed in an overall "⊏" shape including the short end and the open end when viewed on the x-z plane, and through the above-described structure, the first area and the second area may operate as a resonator having a length of 1/4 microwave wavelength.

According to an embodiment, the first inner conductor 223 and the second inner conductor 225 may be formed to have the same length with respect to the z-axis and may be arranged so that the first area and the second area are symmetrical to each other but are not limited thereto.

The aerosol generating article 10 inserted into the internal space of the outer conductor 221 through the receiving space 220h may be surrounded by the first inner conductor 223 and the second inner conductor 225 and heated by dielectric heating.

At least a part of the electric field generated by the microwave resonance in the first area and/or the second area may propagate toward the inside of the first inner conductor 223 and/or the second inner conductor 225 through the gap 226 between the first inner conductor 223 and the second inner conductor 225, and the aerosol generating article 10 surrounded by the first inner conductor 223 and the second inner semiconductor 225 may be heated by the propagated electric field. For example, the dielectric included in aerosol generating article 10 may generate heat through the electric field propagating through the gap 226, and the aerosol generating article 10 may be heated by heat generated from the dielectric.

In the heater assembly 200 according to an embodiment, the diameters of the first inner conductor 223 and the second inner conductor 225 may be less than a specified value, thereby preventing the electric field propagated inside the first inner conductor 223 and/or the second inner conductor 225 from leaking out of the heater assembly 200 or the resonance unit 220.

The "specified value" in the present disclosure may refer to a diameter value where the electric field starts to leak out of the first inner conductor 223 and/or the second inner conductor 225. For example, when the diameter of the first inner conductor 223 and/or the second inner conductor 225 is a specified value or greater, a part of the electric field introduced into the first inner conductor 223 and/or the second inner conductor 225 leaks out of the resonance unit 220.

On the other hand, the heater assembly 200 according to an embodiment may prevent the electric field from propagating to the outside of the resonance unit 220 through a structure where the diameters of the first inner conductor 223 and the second inner conductor 225 are less than the specified value, and as a result, the electric field may be prevented from leaking out of the heater assembly 200 or the resonance unit 220 without a separate shielding member.

According to an embodiment, when the aerosol generating article 10 is inserted into the resonance unit 220 through the receiving space 220h, the tobacco rod 11 of the aerosol generating article 10 may be arranged at a position corresponding to the gap 226 between the first inner conductor 223 and the second inner conductor 225.

As the electric field generated in the first area and the electric field generated in the second area is introduced into the first inner conductor 223 and/or the second inner conductor 225 through the gap 226, the strongest electric field may be generated in a peripheral area of the gap 226 inside the resonance unit 220.

In the heater assembly 200 according to an embodiment, the heating efficiency ("dielectric heating efficiency") of the heater assembly 200 may be improved by positioning the tobacco rod 11 containing the dielectric that generates heat through the electric field at a position corresponding to the gap 226 where the electric field is strongest.

According to an embodiment, the resonance unit 220 may further include a blocking unit 224 located inside the first inner conductor 223 and configured to close the cross-section of the first inner conductor 223 to limit a flow direction of the aerosol generated from the aerosol generating article 10. For example, the blocking unit 224 may close the cross-section of the first inner conductor 223 to block the flow of aerosol generated from the aerosol generating article 10 toward the -z-direction.

When the aerosol generated from the aerosol generating article 10 or droplets generated as the aerosol is liquefied flows in the -z-direction into other components of the aerosol generating device (e.g., the aerosol generating device 100 of FIG. 1), it may cause malfunction or damage to the components of the aerosol generation device. On the other hand, the heater assembly 200 according to an embodiment may limit the flow direction of the aerosol through the blocking unit 224, thereby preventing malfunction or damage to the components of the aerosol generating device due to the aerosol or the droplets.

According to an embodiment, the resonance unit 220 may further include a dielectric receiving space 227 for receiving a dielectric. The dielectric receiving space 227 may refer to an empty space formed between the outer conductor 221 and the first inner conductor 223 and the second inner conductor 225, and a dielectric having a low microwave absorption rate may be received in the dielectric receiving space 227. For example, the dielectric may include, but is not limited to, at least one of quartz, tetrafluoroethylene, and aluminum oxide, or a combination thereof.

The heater assembly 200 according to an embodiment may generate an electric field same as that of the resonance unit 220 without including the dielectric while reducing the overall size of the resonance unit 220 by placing the dielectric inside the dielectric receiving space. That is, in the heater assembly 200 according to an embodiment, the size of the resonance unit 220 may be reduced by using the dielectric inside the dielectric receiving space 227, thereby reducing the mounting space of the resonance unit 220 in the aerosol generating device, and as a result, the aerosol generating device may be miniaturized.

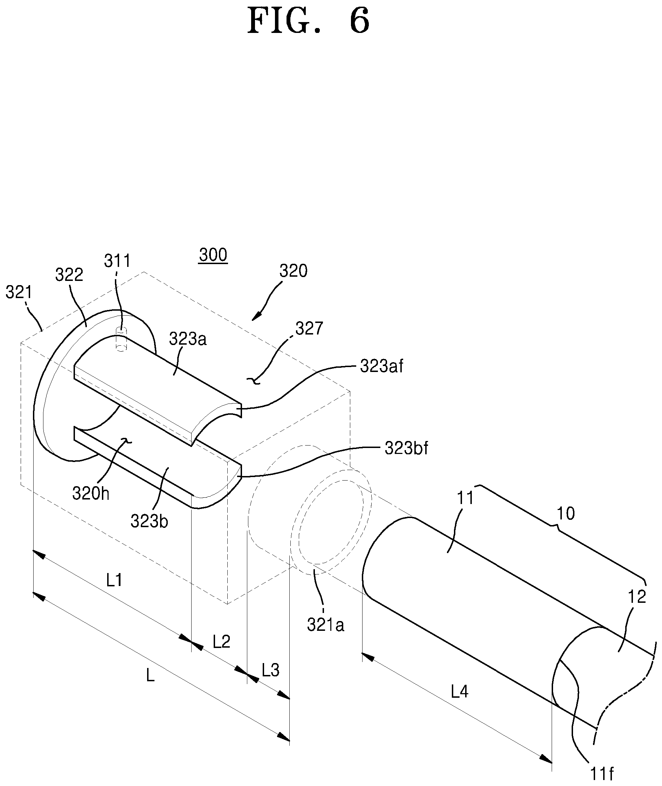

FIG. 6 is a schematic perspective view of a heater assembly according to another embodiment.

A heater assembly 300 according to an embodiment shown in FIG. 6 may include a resonance unit 320 that generates microwave resonance and a coupler 311 that supplies microwave to the resonance unit 320.

The resonance unit 320 may include a case 321, a plurality of plates 323a and 323b, and a connector 322 that connects the plurality of plates 323a and 323b to the case 321.

The coupler 311 may supply the microwaves to at least one of the plurality of plates 323a and 323b to generate the microwave resonance in the resonance unit 320.

The resonance unit 320 may surround at least one area of the aerosol generating article 10 inserted into the aerosol generating device. The coupler 311 may supply the microwaves generated by the oscillation unit (not shown) to the resonance unit 320. When the microwaves are supplied to the resonance unit 320, the microwave resonance may occur in the resonance unit 320 and the resonance unit 320 may heat the aerosol generating article 10. For example, dielectrics included in the aerosol generating article 10 may generate heat through the electric field generated inside the resonance unit 320 by microwave, and the aerosol generating article 10 may be heated by heat generated from the dielectrics.

The case 321 of the resonance unit 320 functions as an "outer conductor". Since the case 321 is formed in an empty hollow shape, components of the resonance unit 320 may be arranged inside the case 321.

The case 321 may include a receiving space 320h where the aerosol generating article 10 can be received, and an opening 321a where the aerosol generating article 10 can be inserted. The opening 321a is connected to the receiving space 320h. Since the opening 321a is open toward the outside of the case 321, the receiving space 320h is connected to the outside through the opening 321a. Accordingly, the aerosol generating article 10 may be inserted into the receiving space 320h of the case 321 through the opening 321a of the case 321.

Although the case 321 shown in the drawing has a square cross-sectional shape, the shape of the case 321 may be modified into various shapes. For example, the structure of the case 321 may be modified to have various cross-sectional shapes, such as rectangular, elliptical, or circular. The case 321 may extend long in one direction.

The plurality of plates 323a and 323b that can function as an "inner conductor" of the resonance unit 320 may be arranged inside the case 321.

The plurality of plates 323a and 323b may be spaced apart from each other in the circumferential direction of the aerosol generating article 10 received in the receiving space 320h. The plurality of plates 323a and 323b may include a first plate 323a arranged to surround one area of the aerosol generating article 10 and a second plate 323b arranged to surround another area of the aerosol generation article 10.

The plurality of plates 323a and 323b may be connected to the case 321 by the connector 322. In addition, one end of the first plate 323a may be connected to one end of the second plate 323b of the plurality of plates 323a and 323b by the connector 322. Accordingly, a closed end may be formed by the connector 322 at one end of the plurality of plates 323a and 323b.

The other end 323af of the first plate 323a may be spaced apart from the other end 323bf of the second plate 323b of the plurality of plates 323a and 323b to be open. Since the other ends of the plurality of plates 323a and 323b are spaced apart from each other, open ends may be formed at the other ends of the plurality of plates 323a and 323b.

The plurality of plates 323a and 323b may be connected to the connector 322 to complete a resonator assembly. The shape of the cross-section of the resonator assembly in the longitudinal direction may include a "horseshoe-shape".

The plurality of plates 323a and 323b extend in the longitudinal direction of the aerosol generating article 10. At least part of the plurality of plates 323a and 323b may be curved to protrude outward from the center of the aerosol generating article 10 in the longitudinal direction.

For example, when the aerosol generating article 10 is manufactured in a cylindrical shape, the plurality of plates 323a and 323b may be formed to be curved in the circumferential direction along the outer surface of the aerosol generating article 10. The radius of curvature of the cross-section of the plurality of plates 323a and 323b may be the same as the radius of curvature of the aerosol generating article 10. The radius of curvature of the cross-section of the plurality of plates 323a and 323b may be variously modified. For example, the radius of curvature of the cross-section of the plurality of plates 323a and 323b may be greater than or less than the radius of curvature of the aerosol generating article 10.

According to the structure where the plurality of plates 323a and 323b are curved in the circumferential direction along the outer surface of the aerosol generating article 10, a more uniform electric field is formed in the resonance unit 320, so that the heater assembly 300 may uniformly heat the aerosol generating article 10.

The open ends of the other ends of the plurality of plates 323a and 323b may be positioned to face the opening 321a of the case 321. The opening 321a of the case 321 may be spaced away from the ends of the other ends of the plurality of plates 323a and 323b.

The open ends of the other ends of the plurality of plates 323a and 323b may be aligned with respect to the opening 321a of the case 321. Accordingly, when the aerosol generating article 10 is inserted into the receiving space 320h through the opening 321a of the case 321, a portion of the aerosol generating article 10 located in the receiving spaces 320h may be surrounded by the plurality of plates 323a and 323b.

Two of the plurality of plates 323a and 323b are arranged at positions opposite to each other with respect to the center of the aerosol generating article 10 in the longitudinal direction. Embodiments are not limited by the number of the plurality of plates 323a and 323b, and the number of the plurality of plates 323a and 323b may be, e.g., three, or four or more.

The plurality of plates 323a and 323b may be arranged symmetrically to each other with respect to a central axis in the longitudinal direction of the aerosol generating article 10, that is, a direction in which the aerosol generating article 10 extends.

At least one of the plurality of plates 323a and 323b may be in contact with the coupler 311 connected to the oscillation unit (not shown). Specifically, at least a part of the first plate 323a may be in contact with the coupler 311. When the microwaves are transmitted to the first plate 323a through the coupler 311, the microwave resonance is formed between the plurality of plates 323a and 323b. In addition, the microwave resonance is also formed between the first plate 323a and an upper plate of the case 321, and between the second plate 323b and a lower plate of the case 321. Thus, an electric field may be generated between the plurality of plates 323a and 323b and the connector 322, between the first plate 323a and the upper plate of the case 321, and between the second plate 323b and the lower plate of the case 321.

As the coupler 311 passes through the case 321, one end of the coupler 311 may be in contact with the oscillation unit (not shown) and the other end of the coupler 311 may be in contact with an area of the first plate 323a. As the microwaves generated by the oscillation unit (not shown) is transmitted to the plurality of plates 323a and 323b and the connector 322 through the coupler 311, an electric field may be generated inside the assembly of the plurality of plates 323a and 323b and the connector 322.

In addition, according to the structure of the resonance unit 320 of the heater assembly 300, a triple resonance mode may be formed in the resonance unit 320. The microwave resonance in a transverse electric & magnetic (TEM) mode is formed between the plurality of plates 323a and 323b. In addition, the resonance in the TEM mode different from the resonance formed between the plurality of plates 323a and 323b is formed between the first plate 323a and the upper plate of the case 321 and between the second plate 323b and the lower plate of the case 321. Since the resonance unit 320 of FIG. 6 is capable of resonating in the TEM mode by the plurality of plates 323a and 323b, the resonance unit 320 may be manufactured to have a smaller size than the resonance unit 220 in FIG. 5 capable of resonating only in a transverse electric (TE) mode and a transverse magnetic (TM) mode.

As the triple resonance occurs in the resonance unit 320 of the heater assembly 300, the aerosol generating article 10 may be heated more effectively and uniformly.

The resonance unit 320 according to the embodiment described above may include a short end having a length (λ/4) of 1/4 microwave wavelength (λ), where the cross-section is closed, and an open end located in a direction opposite to the short end, where at least one area of the cross-section is open.

One end of the resonance unit 320 corresponding to an area on the left side in FIG. 6 forms a closed end by a structure where one end of the plurality of plates 323a and 323b and the connector 322 are connected to the case 321. The other end of the resonance unit 320 corresponding to an area on the right side in FIG. 6 forms an open end by opening the opening 321a of the case 321 to the outside. With such a structure of the resonance unit 320, the resonance unit 320 may operate as a resonator having a length of 1/4 microwave wavelength.

According to the above-described resonant structure of the resonance unit 320, an electric field may not propagate outside the resonance unit 320. Therefore, the heater assembly 300 may prevent the electric field from leaking out of the heater assembly 300 even without a separate shielding member for shielding the electric field.

The aerosol generating article 10 inserted into the receiving space 320h of the case 321 may be surrounded by the first plate 323a and the second plate 323b and heated by dielectric heating. For example, a part of the aerosol generating article 10 including a medium inserted into the receiving space 320h of the case 321 may be arranged in the space between the first plate 323a and the second plate 323b. As the dielectric included in the aerosol generating article 10 generates heat through the electric field generated in the space between the first plate 323a and the second plate 323b, the aerosol generating article 10 may be heated.

In addition, a secondary heating effect on the aerosol generating article 10 may be achieved by the action of the electric field due to the resonance mode formed between the first plate 323a and the upper plate of the case 321 and between the second plate 323b and the lower plate of the case 321.

When the aerosol generating article 10 is inserted into the resonance unit 320 through the receiving space 320h, the tobacco rod 11 of the aerosol generating article 10 may be positioned between the plurality of plates 323a and 323b.

The length L4 of the tobacco rod 11 may be greater than the length L1 of the plurality of plates 323a and 323b. Therefore, a front end 11f of the tobacco rod 11 in contact with the filter rod 12 is located at a position protruding from the other end 323af of the first plate 323a and the other end 323bf of the second plate 323b in the direction toward the opening 321a of the case 321.

A resonance peak may be formed at the other ends of the plurality of plates 323a and 323b operating as a resonator, thereby generating a stronger electric field than other areas. When the aerosol generating article 10 is inserted into the heater assembly 300, the tobacco rod 11 containing a dielectric capable of generating heat through the electric field may be arranged to correspond to an area where the electric field is strongest, thereby improving the heating efficiency (or "dielectric heating efficiency") of the heater assembly 300.

Referring to FIG. 6, the length L1 of the plurality of plates 323a and 323b may be set to be smaller than the length L1+L2 of the internal space of the case 321. Thus, the other ends of the plurality of plates 323a and 323b may be located inside the case 321 than the opening 321a. That is, the other ends of the plurality of plates 323a and 323b may be spaced apart at a distance of L2 from a rear end of the opening 321a.

The length from the rear end of the opening 321a where the opening 321a is connected to the case 321 to a front end of the opening 321a where the open opening 321a is open may be L3. The total length of the case 321 in the longitudinal direction of the case 321 may be L. The total length of the case 321, L, may be determined by a sum of the length L1 of the plurality of plates 323a and 323b, the length L2 between the plurality of plates 323a and 323b and the rear end of the opening 321a, and the length L3 of the opening 321a protruding from the case 321.

To prevent leakage of the microwaves, the front end of the opening 321a that is opened is positioned to protrude from the case 321 by the length of L3. Since the opening 321a of the case 321 protrudes from the case 321, the opening 321a may function to prevent the microwaves inside the case 321 of the resonance unit 320 from leaking out of the case 321.

The resonance unit 320 may further include a dielectric receiving space 327 for receiving a dielectric. The dielectric receiving space 327 may be formed in an empty space between the case 321 and the plurality of plates 323a and 323b. The dielectric having a low microwave absorption rate may be received in the dielectric receiving space 327.

The heater assembly 300 may generate an electric field at the same level as that generated in the resonance unit 320 that does not include a dielectric by arranging the dielectric inside the dielectric receiving space 327, thereby reducing the overall size of the resonance unit 320. That is, by reducing the size of the resonance unit 320 through the dielectric arranged inside the dielectric receiving space 327, the mounting space of the resonance unit 320 within the aerosol generating device may be reduced, and as a result, the aerosol generating device may be miniaturized.

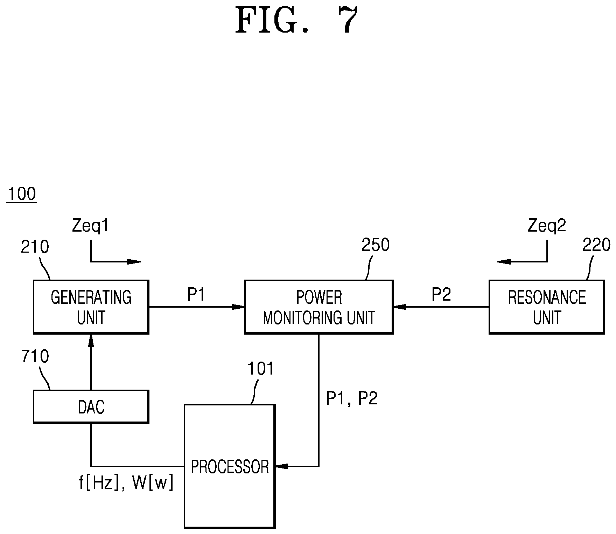

FIG. 7 is an internal block diagram illustrating a method of controlling output of an oscillation unit, according to an embodiment.

FIG. 7 shows only components for controlling the output of the oscillation unit 210 among components of the aerosol generating device 100 in FIGS. 3 and 4. The output of the oscillation unit 210 may refer to a magnitude and a frequency of the microwave power. Therefore, descriptions that are substantially the same as those given above with reference to FIGS. 3 and 4 may be omitted.

Referring to FIG. 7, the aerosol generating device 100 may include an oscillation unit 210, a power monitoring unit 250, a resonance unit 220, a DAC 710, and a processor 101.

The oscillation unit 210 may be configured as a VCO. The processor 101 may apply the second control signal to the oscillation unit 210 to vary the frequency of the microwaves output from the oscillation unit 210. The processor 101 may generate the second control signal in a digital format. The DAC 710 may convert the second control signal received from the processor 101 into an analog signal and transmit the analog signal to the oscillation unit 210. The oscillation unit 210 receives the second control signal in an analog format from the DAC 710, and the frequency of the microwaves output from the oscillation unit 210 may be determined based on a voltage magnitude of the received second control signal. The frequency of the microwaves output from the oscillation unit 210 may be determined to be linearly proportional to the voltage magnitude of the second control signal. For example, the processor 101 may control the oscillation unit 210 to output the microwaves having any one output frequency selected from the range of 2.4 Ghz to 2.5 Ghz or the range of 5.7 Ghz to 5.9 Ghz through the second control signal.

In an embodiment, the oscillation unit 210 includes at least one switching element, and the processor 101 may adjust on/off of the switching element through the second control signal, thereby varying the output frequency of the microwaves.

In addition, the oscillation unit 210 includes a power amplifier, wherein the power amplifier may adjust the power level of the output microwave by increasing or decreasing the amplitude of the microwaves according to the second control signal of the processor 101. For example, the processor 101 may apply the second control signal to the oscillation unit 210 to control the oscillation unit 210 to output the microwaves having any one power magnitude selected from the range of 3 W to 20 W.

The microwave generated by the oscillation unit 210 may be output to the resonance unit 220.

The resonance unit 220 may receive the aerosol generating article 10 and resonate the microwaves provided from the oscillation unit 210, thereby heating the aerosol generating article 10. The internal structure of the resonance unit 220 may be as shown in FIGS. 4 to 6.

The power monitoring unit 250 may be configured to track a change in the resonance frequency of the resonance unit 220 in real time.

More specifically, the impedance of the resonance unit 220 may vary as the dielectric material included in the aerosol generating article 10 is heated and consumed by the microwaves. When the oscillation unit 210 is controlled to have a fixed output even though the impedance of the resonance unit 220 varies, a first impedance Zeq1 of the resonance unit 220 viewed from the oscillation unit 210 may not be the same as a second impedance Zeq2 of the oscillation unit 210 viewed from the resonance unit 220. In other words, the first impedance Zeq1 may not match the second impedance Zeq2. In addition, since impedance matching is related to a maximum power transfer condition, the maximum power transfer condition may not be satisfied. Accordingly, the power supplied from the oscillation unit 210 may not be completely transmitted to the resonance unit 220, and a part of the power may be reflected from the resonance unit 220 and input to the oscillation unit 210 again.

The power monitoring unit 250 may measure reflected microwave power reflected from the resonance unit 220 and input to the oscillation unit 210 to match the first impedance Zeq1 with the second impedance Zeq2. According to an embodiment, the power monitoring unit 250 may further measure an output microwave power output from the oscillation unit 210 and input to the resonance unit 220. In the following, the output microwave power may be referred to as a first power P1 and the reflected microwave power may be referred to as a second power P2. The first electric power P1 and the second electric power P2 may refer to a magnitude of electric power.

The power monitoring unit 250 may provide information about the first power P1 and/or the second power P2 to the processor 101.

The processor 101 may match the first impedance Zeq1 with the second impedance Zeq2 based on the information about the first power P1 and/or the second power P2 provided from the power monitoring unit 250. The impedance matching may be achieved by adjusting the output frequency of the oscillation unit 210. This is because impedance is a parameter related to frequency.

The processor 101 may adjust the output frequency of the oscillation unit 210 such that the second power P2 measured by the power monitoring unit 250 is within a reference power range. According to an embodiment, the processor 101 may adjust the output frequency of the oscillation unit 210 such that the difference between the first power P1 and the second power P2 measured by the power monitoring unit 250 falls within a preset reference power range. For example, the reference power range may be, but is not limited to, between 0 w and 1 w.

The processor 101 may control the oscillation unit 210 such that the second power P2 is within the reference power range while sweeping an output frequency output from the oscillation unit 210 within the preset reference band range. According to an embodiment, the processor 101 may control the oscillation unit 210 such that a difference between the first power P1 and the second power P2 falls within a preset range. For example, the reference band range may include, but is not limited to, a range of 2.4 Ghz to 2.5 Ghz or a range of 5.7 Ghz to 5.9 Ghz.

Meanwhile, the above-described adjustment of the output frequency of the processor 101 may be performed in real time. In other words, the processor 101 may adjust the output frequency of the oscillation unit 210 independently of the power scaling of the oscillation unit 220 described below.

The processor 101 may adjust the magnitude of the microwave power output from the oscillation unit 210 according to a preset temperature profile and/or power profile regardless of the adjustment of the output frequency of the oscillation unit 210.

The temperature profile may include information about a target temperature of the aerosol generating article 10 over time. In addition, the power profile may include information about the target power of the oscillation unit 210 over time. In other words, the temperature profile and the power profile may include information about the target temperature and the target power, respectively, according to the preheating period and the smoking period.

The processor 101 may control the oscillation unit 210 to output the microwave power of a first magnitude in the preheating period through the second control signal. In addition, the processor 101 may control the oscillation unit 210 to output the microwave power of a second magnitude smaller than the first magnitude in the smoking period after the preheating period through the second control signal. In addition, the processor 101 may control the magnitude of the microwave power output from the oscillation unit 210 in the smoking period to be progressively increased.

The processor 101 may match the output frequency of the oscillation unit 210 with the resonance frequency of the resonance unit 220 in real time while adjusting the magnitude of the microwave power output from the oscillation unit 210 according to a preset profile. As the output frequency of the oscillation unit 210 is matched with the resonance frequency of the resonance unit 220, the power transfer efficiency may be significantly increased and the aerosol generating article 10 may be uniformly heated.

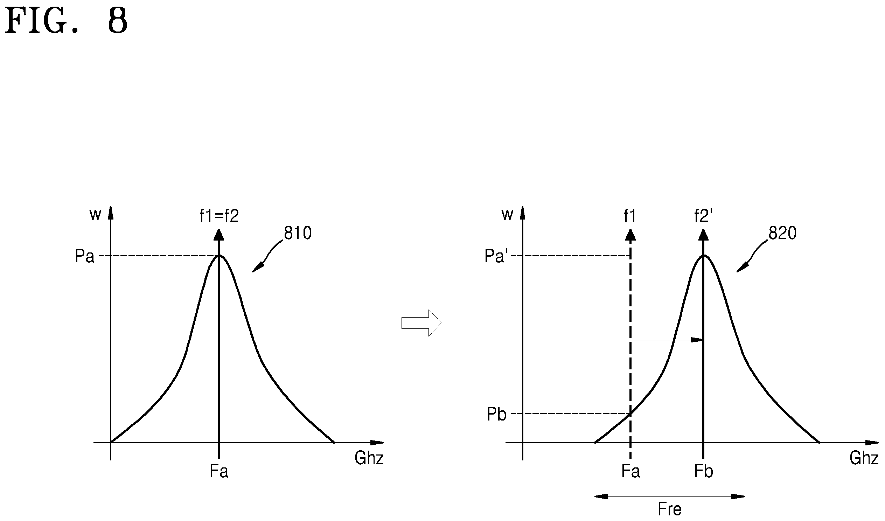

FIG. 8 is a diagram illustrating a method for tracking a resonance frequency by using an output microwave power of an oscillation unit and a reflected microwave power of a resonance unit, according to an embodiment.

Referring to FIG. 8, the processor 101 may detect a mismatch between the first impedance Zeq1 and the second impedance Zeq2 as a difference between the first power P1 and/or the second power P2 and may adjust the output frequency of the oscillation unit 210 to match the impedances. As the output frequency of the oscillation unit 210 is adjusted, the output frequency of the oscillation unit 210 may be matched with the resonance frequency of the resonance unit 220. The matching of the present disclosure includes not only perfect matching but also cases where the output frequency is included in upper and lower threshold value ranges of the resonance frequency. This is to account for the loss due to internal components of the dielectric heating unit 200. For example, matching refers to a case where the output frequency falls within a range from a resonance frequency -α to a resonance frequency +α, wherein α may be, but is not limited to, 10 khz.

In FIG. 8, the x-axis indicates the frequency and the y-axis indicates the amount of power transferred to the resonance unit 220 according to the frequency. FIG. 8 illustrates a diagram 810 where an output frequency f1 of the oscillation unit 210 matches a resonance frequency f2 of the resonance unit 220, and a diagram 820 for matching the output frequency f1 of the oscillation unit 210 with a varied resonance frequency f2' of the resonance unit 220 by varying the resonance frequency to f2'.

In FIG. 8, the output frequency f1 of the oscillation unit 210 may be matched with the resonance frequency f2 of the resonance unit 220. For example, when receiving a user input for heating the device, the processor 101 may sweep the output frequency of the oscillation unit 210 and select Fa, which is a frequency where the second power P2 reflected from the resonance unit 220 and input to the oscillation unit 210 is minimized, as the output frequency. According to an embodiment, the processor 101 may select, as an output frequency, Fa that is a frequency where a difference between the first power P1 transmitted from the oscillation unit 210 to the resonance unit 220 and the second power P2 reflected from the resonance unit 220 to be input to the oscillation unit 210 is minimized. As the output frequency f1 of the oscillation unit 210 matches the resonance frequency f2 of the resonance unit 220, a maximum power Pa may be provided to the resonance unit 220. The resonance unit 220 may heat the aerosol generating article 10 by using power provided from the oscillation unit 210.

On the other hand, as the dielectric material included in the aerosol generating article 10 is heated and consumed by the microwaves, the impedance of the resonance unit 220 may be varied, thereby varying the resonance frequency f2. In an embodiment, the resonance frequency f2 of the resonance unit 220 may be increased to f2' according to a decrease in the dielectric material included in the aerosol generating article 10. When the oscillation unit 210 is controlled at a fixed output frequency even when the resonance frequency of the resonance unit 220 is increased to f2', a maximum power Pa' may not be transmitted to the resonance unit 220 and a power Pb smaller than Pa' may be transmitted to the resonance unit 220. In other words, the power Pb may be consumed by the resonance unit 220 and the remaining power may be reflected and output toward the oscillation unit 210.

The processor 101 may adjust f1 such that maximum power is transmitted to the resonance unit 220 by matching f1 that is the output frequency of the oscillation unit 210 and f2' that is the varied resonance frequency. To this end, the processor 101 may receive, from the oscillation unit 210, information about the first power P1 output from the power monitoring unit 250 to the resonance unit 220. In addition, the processor 101 may receive information about the second electric power P2 reflected from the resonance unit 220 and input in the direction of the oscillation unit 210. The processor 101 may receive information about the second power P2 corresponding to the variation of the resonance frequency of the resonance unit 220 from the power monitoring unit 250 in real time.

The processor 101 may control the oscillation unit 210 such that the second power P2 measured by the power monitoring unit 250 is within the reference power range. According to an embodiment, the processor 101 may control the output of the oscillation unit 210 such that a difference between the first power P1 and the second power P2 measured by the power monitoring unit 250 falls within the preset reference power range. For example, the reference power range may be, but is not limited to, between 0 w and 1 w.

The processor 101 may sweep a frequency of the microwave power output from the oscillation unit 210 within a preset reference band range Fre and may control the oscillation unit 210 such that the second power P2 is within the reference power range. According to an embodiment, the processor 101 may adjust the output frequency of the microwave power such that a difference between the first power P1 and the second power P2 falls within the reference power range. For example, the reference band range Fre may include a range of 2.4 Ghz to 2.5 Ghz or a range of 5.7 Ghz to 5.9 Ghz, but is not limited thereto.

The processor 101 may adjust the output frequency of the microwave power to any one frequency selected from the reference band range Fre so that the difference between the first power P1 and the second power P2 falls within the reference power range, thereby matching the output frequency with the resonance frequency. In other words, the processor 101 may adjust the output frequency of the oscillation unit 210 from Fa to Fb, which is the resonance frequency of the resonance unit 220. The above-described adjustment of the output frequency of the microwave power may be performed independently of the magnitude of the microwave power.

The above detailed description is to be considered in all respects as illustrative and not restrictive. The scope of the present disclosure should be determined by the reasonable interpretation of the appended claims, and all changes that come within the scope of the equivalents of the present disclosure are intended to be embraced therein.

## Claims

1. An aerosol generating device, comprising:
an oscillation unit that generates microwaves;
a resonance unit that accommodates an aerosol generating article and heats the aerosol generating article by resonating the microwaves; and
a processor that applies a control signal to the oscillation unit to control an output frequency of microwaves output from the oscillation unit.

2. The aerosol generating device of claim 1, further comprising a digital-to-analog converter (DAC) which receives the control signal in a digital format from the processor, converts the received digital control signal into an analog control signal, and transmits the analog control signal to the oscillation unit.

3. The aerosol generating device of claim 2, wherein the oscillation unit determines the output frequency of the microwaves, based on a voltage magnitude of the analog control signal.

4. The aerosol generating device of claim 3, wherein the output frequency of the microwaves is linearly proportional to a voltage magnitude of the analog control signal.

5. The aerosol generating device of claim 1, further comprising a power monitoring unit which measures reflected microwave power reflected from the resonance unit and input to the oscillation unit,
wherein the processor generates the control signal based on the reflected microwave power measured by the power monitoring unit.

6. The aerosol generating device of claim 5, wherein, in the resonance unit, a resonance frequency of the microwaves is varied as a dielectric material included in the aerosol generating article is heated and consumed by the microwaves.

7. The aerosol generating device of claim 6, wherein the resonance frequency in the resonance unit increases as the dielectric material included in the aerosol generating article decreases.

8. The aerosol generating device of claim 6, wherein the power monitoring unit measures the reflected microwave power corresponding to variation of the resonance frequency.

9. The aerosol generating device of claim 5, wherein the processor controls an output of the oscillation unit such that the reflected microwave power measured by the power monitoring unit falls within a preset reference power range.

10. The aerosol generating device of claim 9, wherein the processor sweeps an output frequency of microwave power output from the oscillation unit, within the preset reference band range, and adjusts the output frequency of the microwave power such that the reflected microwave power is within the reference power range.

11. The aerosol generating device of claim 10, wherein the processor sweeps the output frequency of the microwave power output from the oscillation unit, within the reference band range of between 2.4 Ghz and 2.5 Ghz.

12. The aerosol generating device of claim 10, wherein the processor adjusts the output frequency of the microwave power to any one frequency selected from the reference band range, thereby matching the output frequency with a resonance frequency of the resonance unit.

13. The aerosol generating device of claim 1, wherein the processor adjusts, according to a preset power profile, a magnitude of microwave power output from the oscillation unit, and controls the magnitude of the microwave power and the output frequency of the microwave power independently of each other.

14. The aerosol generating device of claim 1, wherein the resonance unit comprises a first inner conductor in a shape of a hollow cylinder surrounding an area of the aerosol generating article, and a second inner conductor in a shape of a hollow cylinder spaced at a certain distance from the first inner conductor and surrounding another area of the aerosol generating article, wherein the microwaves are resonated by the first inner conductor and the second inner conductor.

15. The aerosol generating device of claim 1, wherein the resonance unit comprises a first plate surrounding an area of the aerosol generating article, and a second plate spaced apart from the first plate in a circumferential direction of the aerosol generating article and surrounding another area of the aerosol generation article, wherein the microwaves are resonated by the first plate and the second plate.
